# EUROPEAN PATENT SPECIFICATION

(11) **EP 3 124 318 B1**
(45) Date of publication and mention of the grant of the patent: **15.11.2017**
(21) Application number: 16175037.7
(22) Date of filing: 17.06.2016
(51) Int. Cl.: B60R 21/01, G07C 5/08, B60N 2/00, B60R 21/015, G01G 19/414

(54) **SEAT-OCCUPANCY STATE DETECTION DEVICE**
SITZPLATZBELEGUNGSSTATUSDETEKTIONSVORRICHTUNG
DISPOSITIF DE DÉTECTION D'ÉTAT D'OCCUPATION DE SIÈGE

(30) Priority: 19.06.2015 JP 2015123947
(43) Date of publication of application: 01.02.2017
(73) Proprietor: AISIN SEIKI KABUSHIKI KAISHA, Kariya-shi, Aichi-ken, 448-8650 (JP)
(72) Inventor: FUJII, Hiroyuki, KARIYA-SHI, AICHI-KEN, 448-8650 (JP); HONDA, Isao, KARIYA-SHI, AICHI-KEN, 448-8650 (JP); IZUNO, Takahiro, KARIYA-SHI, AICHI-KEN, 448-8650 (JP)
(74) Representative: Intès, Didier Gérard André

(56) References cited:
- EP-A1- 1 577 170
- DE-A1- 10 152 958
- DE-A1-102007 062 764
- JP-A- 2000 301 980

## Description

### TECHNICAL FIELD

This disclosure relates to a seat-occupancy state detection device.

### BACKGROUND DISCUSSION

In the related art, some seat-occupancy state detection devices of a vehicle seat include a seat occupancy sensor that forms a pressure-sensitive section on a seat occupancy surface of the seat, and a load sensor that detects a load applied to the seat occupancy surface. For example, a seat-occupancy state detection device disclosed in JP 2010-195358A (Reference 1) determines a physique of an occupant sitting on a seat, based on a comparison between a detected value and a threshold value of a load detected by a load sensor (occupant detection). In addition, in the seat-occupancy state detection device, a membrane switch is used in a seat occupancy sensor. Further, the seat-occupancy state detection device changes the threshold value of the load used in the occupant detection, depending on an ON/OFF state of the seat occupancy sensor. In this manner, even in a case where a sitting posture of an occupant on the seat tilts (lateral shift, leaning on one side, or the like), it is possible to perform occupant detection with high accuracy.

However, in such a seat-occupancy state detection device, as a premise, the seat occupancy sensor needs to function in a normal manner. Then, rapid detection of abnormality is demanded in order to ensure the accuracy of the seat-occupancy state determination, including the occupant detection described above. In this respect, there is still room for improvement.

### SUMMARY

Thus, a need exists for a seat-occupancy state detection device that can rapidly detect an abnormality in a seat occupancy sensor, with a simple configuration.

A seat-occupancy state detection device according to an aspect of this disclosure preferably includes: a seat occupancy sensor that forms a pressure sensitive portion on a seat occupancy surface of a seat; a load sensor that detects a load applied to the seat occupancy surface; a seat-occupancy state determination unit that determines a seat occupancy state of an occupant on the seat, based on an ON/OFF state of the seat occupancy sensor and the load which is detected by the load sensor; and an abnormality determination unit that determines an occurrence of a first abnormality in which the ON state of the seat occupancy sensor is maintained, in a case where the seat occupancy sensor is in the ON state, and the load, which is detected by the load sensor, is equal to or lower than a first threshold value indicating an unloaded state.

That is, a cushion pad is often disposed on the inner side of a seat cushion, on which the seat occupancy sensor is arranged. Also, a cushion material (for example, a forming resin material) forming the cushion pad often tends to be subjected to thermal expansion. Therefore, in a high-temperature environment, the seat occupancy sensor is pressed by the expanded cushion pad, and thereby there is a possibility that the seat occupancy sensor remains in the ON state. However, in this configuration, it is possible to rapidly detect the occurrence of the abnormality in which the ON state of the seat occupancy sensor is maintained without switching between the ON/OFF states, with a simple configuration. In this manner, it is possible to detect the occupant's seat-occupancy state of the seat with higher accuracy.

It is preferable that the seat-occupancy state detection device further includes: a plurality of the seat occupancy sensors that form the pressure sensitive portions at different positions from each other on the seat occupancy surface, the abnormality determination unit determines the occurrence of the first abnormality in the respective seat occupancy sensors, in a case where all of the seat occupancy sensors are in the ON state, and the load, which is detected by the load sensor, is equal to or lower than the first threshold value.

In this configuration, it is possible to detect, with higher accuracy, the abnormality in which the ON state of the seat occupancy sensors is maintained.

In the seat-occupancy state detection device, It is preferable that the abnormality determination unit determines an occurrence of a second abnormality in the seat occupancy sensor or in the load sensor, in a case where the seat occupancy sensor is in the OFF state, and the load, which is detected by the load sensor, is equal to or higher than a second threshold value.

In this configuration, it is possible to rapidly detect the abnormality of the seat occupancy sensors or the load sensor, with a simple configuration.

It is preferable that the seat-occupancy state detection device further includes: a zero-point correction unit that sets the load to a zero point of the load, in a case where the seat occupancy sensor is in the OFF state and the load, which is detected by the load sensor, is equal to or lower than the first threshold value.

That is, in the detection of the load applied to the seat occupancy surface of the seat, the preset zero point of the load can be shifted due to rocking of the seat cushion that forms the seat occupancy surface. However, in this configuration, the zero point of the load is updated to an appropriate value, as needed. In this manner, it is possible to perform the seat-occupancy state determination with higher accuracy.

In the seat-occupancy state detection device, It is preferable that the seat-occupancy state determination unit includes a seat non-occupancy state determination section that determines a seat non-occupancy state in which no occupant sits on the seat in a case where the seat occupancy sensor enters the OFF state and the load is equal to or lower than a third threshold value, and a first threshold-value setting section that sets the third threshold value used in determination of the seat non-occupancy state to a higher value, as a duration increases after the seat occupancy sensor enters the OFF state.

It is preferable that the seat-occupancy state detection device includes: the load sensor provided on a lower side of the seat at an end portion on one side in a width direction of the seat; and a plurality of the seat occupancy sensors arranged side by side in the width direction of the seat, and the seat-occupancy state determination unit includes an occupant-detection determination section that determines a physique of the occupant who sits on the seat, based on a comparison between the load, which is detected by the load sensor, and a fourth threshold value, and a second threshold-value setting section that sets the fourth threshold value to a higher value, as a load-applied position, which is assumed by a combination of the ON/OFF states of the plurality of seat occupancy sensors, is closer to a position at which the load sensor is disposed.

That is, it is possible to assume an applied position of the load with the occupant sitting on the seat by the combination of the ON/OFF states of the seat occupancy sensors arranged side by side in the width direction of the seat. Also, the value of the load detected by the load sensor is increased as much as the applied position of the load becomes close to the end portion in the width direction of the seat, on the side on which the load sensor is disposed. Hence, in this configuration, it is possible to more rapidly perform the occupant detection determination without lowering the determination accuracy.

According to the aspect of this disclosure, it is possible to rapidly detect an abnormality in a seat occupancy sensor, with a simple configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view (side view) illustrating a schematic configuration of a seat-occupancy state detection device provided in a vehicle seat;
Fig. 2 is a view (plan view) illustrating a schematic configuration of the seat-occupancy state detection device provided in the vehicle seat;
Fig. 3 is a sectional view of a membrane switch constituting a seat occupancy sensor;
Fig. 4 is a flowchart of a procedure of processing seat-occupancy state determination;
Fig. 5 is a flowchart of a procedure of processing seat-occupancy state correcting determination;
Fig. 6 is a flowchart of a procedure of processing a mode change in airbag control;
Fig. 7 is a flowchart of a procedure of processing seat non-occupancy determination;
Fig. 8 is a graph showing load threshold value setting based on the duration after the seat occupancy sensor turns OFF;
Fig. 9 is a table showing the load threshold value setting based on a combination of the ON/OFF states of the seat occupancy sensor;
Fig. 10 is a table showing a condition of detection of abnormality in the seat occupancy sensor;
Fig. 11 is a flowchart of a procedure of processing correction of a zero point of a load; and
Fig. 12 is a table showing a condition of assumption of a child seat.

### DETAILED DESCRIPTION

Hereinafter, an embodiment of a seat-occupancy state detection device provided in a vehicle seat will be described with reference to the drawings.

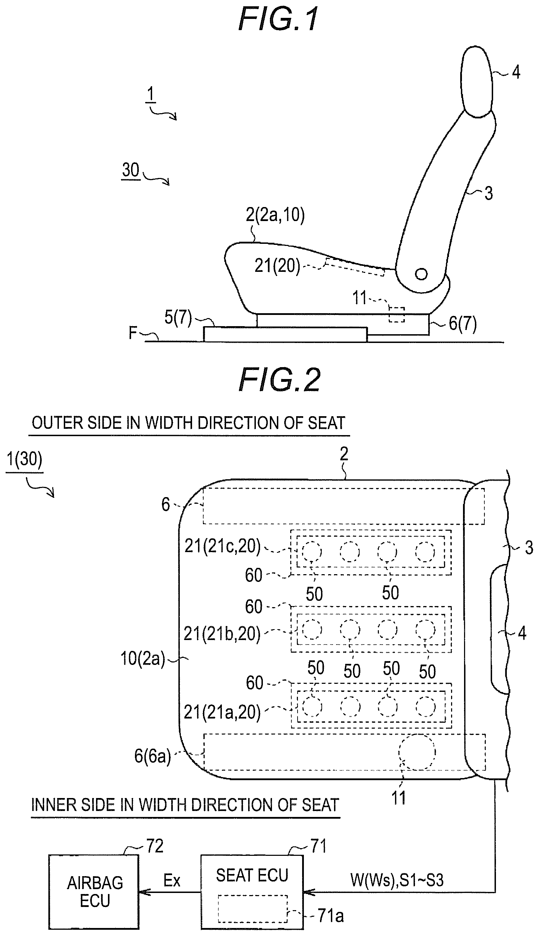

As illustrated in Fig. 1, a vehicle seat 1 includes a seat cushion 2 and a seatback 3 that is provided in a tiltable manner in a rear end section of the seat cushion 2. Also, a headrest 4 is provided on the upper end of the seatback 3.

In the present embodiment, a pair of right and left lower rails 5 extending in a frontward-rearward direction of a vehicle are provided on a floor F of the vehicle. In addition, upper rails 6, which can relatively move on the lower rails 5 in their extending direction, are mounted on the lower rails 5, respectively. Also, the seat 1 of the present embodiment is configured to be supported on the upper side of a seat sliding device 7 formed by the lower rails 5 and the upper rails 6.

In addition, as illustrated in Figs. 1 and 2, in the seat 1 of the present embodiment, a load sensor 11 that detects a load Ws (detected value W) applied to a seat occupancy surface 10 of the seat cushion is provided on a lower side of the seat cushion 2. Specifically, a known distortion sensor is used in the load sensor 11 of the present embodiment. Also, the load sensor 11 is provided between the upper rail 6 constituting the seat sliding device 7 described above and the seat cushion 2 supported on the upper rail 6, to be exact, in the vicinity of a rear end portion of an upper rail 6a positioned on the inner side in a width direction of the seat.

In addition, in the seat 1 of the present embodiment, a membrane switch 20, which switches between ON/OFF states when a seat upholstery 2a constituting the seat occupancy surface 10 is pressed, is provided on the inner side of the seat cushion 2. Then, in the present embodiment, the membrane switch 20 is used as a pressure-sensitive seat occupancy sensor 21 and, thereby, a seat-occupancy state detection device 30 is formed to detect a seat occupancy state of an occupant on the seat cushion 2, based on an ON/OFF state of the seat occupancy sensor 21 and the detected value W of the load detected by the load sensor 11 described above.

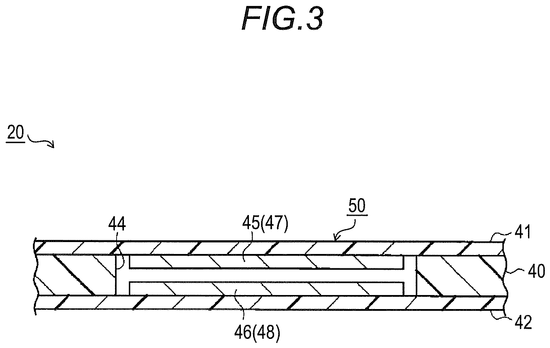

To be exact, as illustrated in Fig. 3, the membrane switch 20 of the present embodiment has a known configuration in which a first film 41 and a second film 42 are laminated (bonded) with an intermediate film 40 as a spacer interposed therebetween. Specifically, circuit patterns 47 and 48, which have contact portions 45 and 46 facing each other via a communication portion (through-hole) 44 formed in the intermediate film 40, are formed on the first film 41 and the second film 42, respectively. Further, in the present embodiment, the circuit patterns 47 and 48 are formed, for example, by being printed or the like with conductive ink. Then, the membrane switch 20 of the present embodiment is configured to be disposed on the inner side of the seat cushion 2, to be exact, under a cushion pad (not illustrated) provided on the inner side of the seat upholstery 2a constituting the seat occupancy surface 10, in a state in which the first film 41 is disposed on the upper side.

In other words, in the membrane switch 20 of the present embodiment, the seat upholstery 2a positioned on the first film is pressed and, thereby, the first film 41 is elastically deformed in a state of being bent downward. In this manner, the contact portion 45 formed in the first film 41 comes into contact with the contact portion 46 formed in the second film 42. Then, the membrane switch 20 of the present embodiment has a configuration in which a pressure-sensitive switch unit (cell) 50 is formed of the contact portion 45 of the first film 41 and the contact portion 46 of the second film 42 which are disposed to face each other in a vertical direction.

As illustrated in Fig. 2, the membrane switch 20 of the present embodiment is provided under the seat upholstery 2a constituting the seat occupancy surface 10 of the seat cushion 2 and has a substantially strip-like external appearance extending in a frontward-rearward direction of the seat (rightward-leftward direction in Fig. 2). In addition, the membrane switch 20 of the present embodiment has a plurality of the pressure sensitive switch units 50 provided in a state of being arranged side by side at a substantially equal interval in a longitudinal direction of the membrane switch. Then, the membrane switch is configured to enter the ON state when at least one of the pressure sensitive switch units 50 is in an ON operation (conduction).

To be more exact, the seat-occupancy state detection device 30 of the present embodiment has three rows of the membrane switches 20 provided in the state of being arranged side by side at a substantially equal interval in the width direction of the seat (vertical direction in Fig. 2). Specifically, the respective membrane switches 20 form separate pressure sensitive portions 60, respectively, on the seat occupancy surface 10 of the seat cushion 2. In this manner, the seat-occupancy state detection device 30 of the present embodiment is configured to include three groups of seat occupancy sensors 21 (21a to 21c) having the pressure sensitive portions 60 on the inner side (inner), at the central section (center), and the outer side (outer) in the width direction of the seat, respectively, on the seat occupancy surface 10.

In the seat-occupancy state detection device 30 of the present embodiment, an output signal of the load sensor 11 described above, which indicates the load Ws (detected value W) and ON/OFF outputs S1 to S3 of the respective seat occupancy sensors 21 are input to a seat ECU 71. In other words, in the seat-occupancy state detection device 30 of the present embodiment, the seat ECU 71 functions as a seat-occupancy state determination unit thereof. Then, the seat ECU 71 controls an operation of a notification device such as a warning lamp, based on a result of seat-occupancy state determination thereof.

### Seat-Occupancy state determination

Next, a mode of the seat-occupancy state determination performed by the seat ECU 71 in the seat-occupancy state detection device 30 of the present embodiment will be described.

In the seat-occupancy state detection device 30 of the present embodiment, the seat ECU 71 determines, as the seat-occupancy state determination, whether or not the seat is in a state in which an occupant sits on the seat 1 (seat occupancy state or seat non-occupancy state). Further, in the present embodiment, the case "seat non-occupancy state" includes a case where the occupant is a child, or a case where a loading item is placed on the seat 1. In addition, the seat ECU 71 determines a physique of an occupant sitting on the seat in a case where it is determined to be the state in which an occupant sits on the seat 1 (occupant detection determination). In this configuration, the occupant detection determination is executed to determine whether the state is a "first seat occupancy state" indicating that an occupant sitting on the seat 1 is an adult, or a "second seat occupancy state" indicating that the occupant is a small adult such as a female adult.

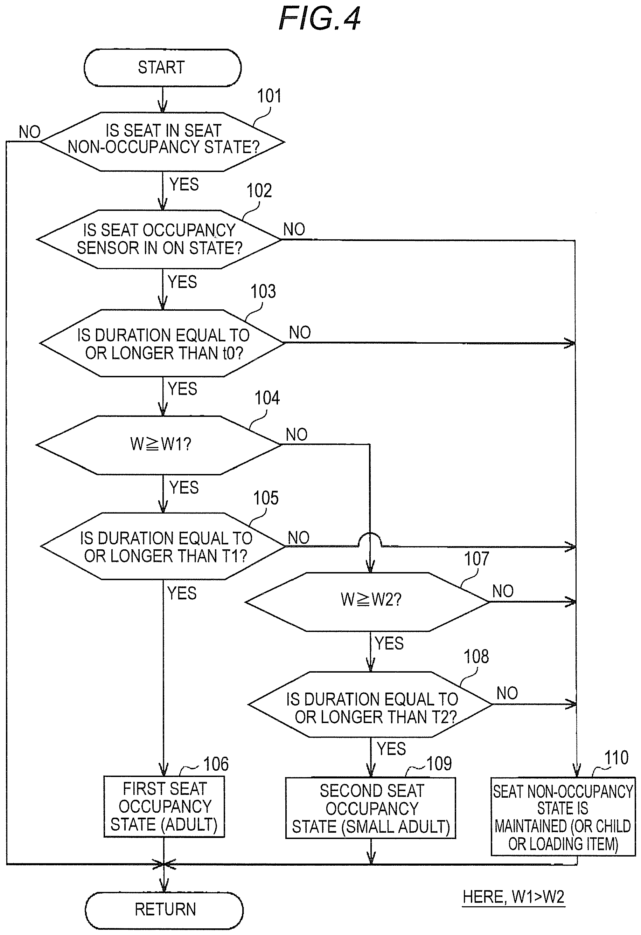

To be exact, as illustrated in a flowchart in Fig. 4, in a state in which it is determined that the seat 1 is in the seat non-occupancy state (Step 101: YES), in a case where the seat occupancy sensor 21 enters the ON state (Step 102: YES), the seat ECU 71 determines whether or not the duration (t) is equal to or longer than a predetermined period of time t0 (Step 103) after the seat occupancy sensor enters the ON state. Further, in the seat-occupancy state detection device 30 of the present embodiment, it is determined in Step 102 that the seat occupancy sensor 21 is turned ON, on a condition that at least one of the three-system seat occupancy sensors 21a to 21c switches from the OFF state to the ON state. In addition, in Step 103, in a case where it is determined that the duration is equal to or longer than the predetermined period of time t0 (t≥t0 and then, Step 103: YES) after the seat occupancy sensor 21 enters the ON state, the seat ECU 71 determines whether or not the detected value W of a load detected by the load sensor 11 described above is equal to or higher than a predetermined threshold value W1 (Step 104). Furthermore, in Step 104, in a case where it is determined that the detected value W of the load is equal to or higher than the predetermined threshold value W1 (W≥W1 and then, Step 104: YES), the seat ECU 71 determines whether or not the detected value W of the load, which is equal to or higher than the predetermined threshold value W1, is maintained for a period of time equal to or longer than a predetermined period of time T1 (Step 105). Then, in Step 105, in the case where it is determined that the load (W) equal to or higher than the predetermined threshold value W1 is maintained for a period of time equal to or longer than the predetermined period of time T1 (T≥T1 and then, Step 105: YES), the seat ECU 71 of the present embodiment is configured to determine that the seat 1 is in the first seat occupancy state (Step 106).

By comparison, in Step 104 described above, in a case where it is determined that the detected value W of the load is lower than the predetermined threshold value W1 (W<W1 and then, Step 104: NO), the seat ECU 71 determines whether or not the detected value W of the load detected by the load sensor 11 is equal to or higher than a predetermined threshold value W2, which is set to be lower than the predetermined threshold value W1 described above (Step 107, here, W2<W1). In addition, in Step 107, in the case where it is determined that the detected value W of the load is equal to or higher than the predetermined threshold value W2 (W≥W2 and then, Step 107: YES), the seat ECU 71 determines whether or not the detected value W of the load, which is equal to or higher than the predetermined threshold value W2, is maintained for a period of time equal to or longer than a predetermined period of time T2 (Step 108). Then, in Step 108, in the case where it is determined that the detected value W of the load, which is equal to or higher than the predetermined threshold value W2, is maintained for a period of time equal to or longer than the predetermined period of time T2 (T≥T2 and then, Step 108: YES), the seat ECU 71 of the present embodiment is configured to determine that the seat 1 is in the second seat occupancy state (Step 109).

In Step 102, in a case where the seat occupancy sensor 21 does not enter the ON state (Step 102: NO) and, in Step 103, the duration does not reach the predetermined period of time t0 (t<t0 and then, Step 103: NO) after the seat occupancy sensor 21 enters the ON state, the seat ECU 71 of the present embodiment does not execute the processes to Step 109. In addition, in Step 105, in a case where a period of time, during which the detected value W of the load is maintained to be equal to or higher than the predetermined threshold value W1, does not reach the predetermined period of time T1 (T<T1 and then, Step 105: NO) and, in Step 107, the detected value W of the load is lower than the predetermined threshold value W2 (W<W2 and then, Step 107: NO), the processes to Step 109 are not executed. Further, in Step 108, also in a case where a period of time, during which the detected value W of the load is maintained to be equal to or higher than the predetermined threshold value W2, does not reach the predetermined period of time T2 (T<T2 and then, NO in Step 108), the process in Step 109 is not executed. Then, the seat ECU 71 of the present embodiment is configured to maintain the "previously performed determination of the seat non-occupancy state" in the states described above (Step 110).

In addition, in Step 101 described above, in a case where it is determined that the seat 1 is in the seat occupancy state (the first seat occupancy state or the second seat occupancy state) (Step 101: NO), the seat ECU 71 does not execute the processes of the steps after Step 101. Then, in this configuration, the "previously performed determination of the seat occupancy state" is maintained.

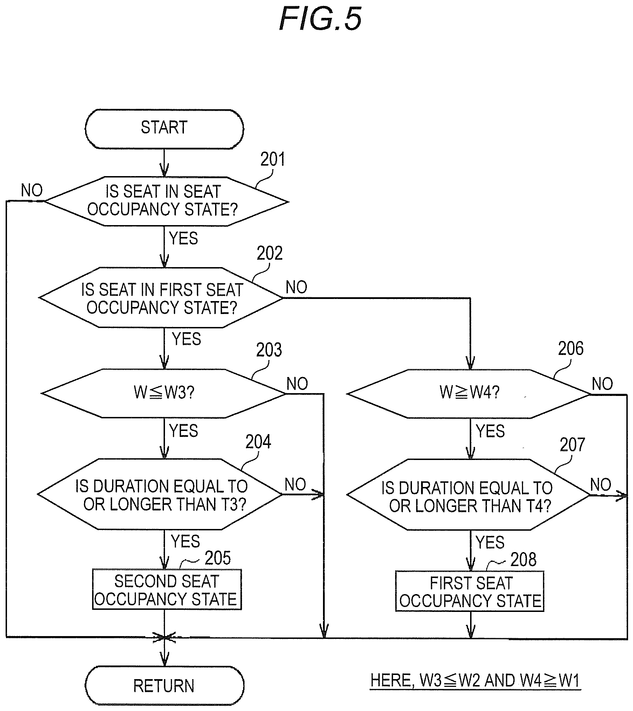

Further, as illustrated in a flowchart in Fig. 5, in a case where it is determined that the seat 1 is in any seat occupancy state, that is, the first seat occupancy state or the second seat occupancy state (Step 201: YES), the seat ECU 71 of the present embodiment performs correction determination between the first seat occupancy state and the second seat occupancy state.

Specifically, in a case where it is determined that the seat 1 is in the first seat occupancy state (Step 202: YES), the seat ECU 71 determines whether or not the detected value W of the load detected by the load sensor 11 is equal to or lower than a predetermined threshold value W3 (Step 203). In the present embodiment, the predetermined threshold value W3 is set to a value equal to or lower than the predetermined threshold value W2 in the seat-occupancy state determination illustrated in the flowchart in Fig. 4 described above (W3≤W2). Further, in a case where it is determined in Step 203 that the detected value W of the load is equal to or lower than the predetermined threshold value W3 (W≤W3 and then, Step 203: YES), the seat ECU 71 determines whether or not the detected value W of the load, which is equal to or lower than the predetermined threshold value W3, is maintained for a period of time equal to or longer than a predetermined period of time T3 (Step 204). Then, in Step 204, in the case where it is determined that the detected value W of the load, which is equal to or lower than the predetermined threshold value W3, is maintained for a period of time equal to or longer than the predetermined period of time T3 (T≥T3 and then, Step 204: YES), the seat ECU 71 of the present embodiment is configured to determine that the seat 1 is in the second seat occupancy state (Step 205).

By comparison, in the case where it is determined that the seat 1 is in the second seat occupancy state (Step 202: NO), the seat ECU 71 of the embodiment determines whether or not the detected value W of the load detected by the load sensor 11 is equal to or higher than a predetermined threshold value W4 (Step 206). In the present embodiment, the predetermined threshold value W4 is set to a value equal to or higher than the predetermined threshold value W1 in the seat-occupancy state determination illustrated in the flowchart in Fig. 4 described above (W1≤W4). In addition, in a case where it is determined in Step 206 that the detected value W of the load is equal to or higher than the predetermined threshold value W4 (W≥W4 and then, Step 206: YES), the seat ECU 71 determines whether or not the detected value W of the load, which is equal to or higher than the predetermined threshold value W4, is maintained for a period of time equal to or longer than a predetermined period of time T4 (Step 207). Then, in Step 207, in the case where it is determined that the detected value W of the load, which is equal to or higher than the predetermined threshold value W4, is maintained for a period of time equal to or longer than the predetermined period of time T4 (T≥T4 and then, Step 207: YES), the seat ECU 71 of the present embodiment is configured to determine that the seat 1 is in the first seat occupancy state (Step 208).

Further, in the seat ECU 71 of the present embodiment, in a case where, in Step 203 described above, the detected value W of the load is higher than the predetermined threshold value W3 (W>W3 and then, Step 203: NO), the processes of the steps after Step 203 are not executed. In addition, in Step 204, in a case where it is determined that a period of time, during which the detected value W of the load is maintained to be equal to or lower than the predetermined threshold value W3, does not reach the predetermined period of time T3 (T<T3 and then, Step 204: NO), the processes of the steps after Step 204 are not executed. In this configuration, the "determination to be the first seat occupancy state" is maintained in the cases described above.

Similarly, in the seat ECU 71, in a case where, in Step 206 described above, the detected value W of the load is lower than the predetermined threshold value W4 (W<W4 and then, Step 206: NO), the processes of Steps 207 and 208 described above are not executed. In addition, in a case where, in Step 207, a period of time, during which the detected value W of the load is maintained to be equal to or higher than the predetermined threshold value W4, does not reach the predetermined period of time T4 (T<T4 and then, Step 207: NO), the process of Step 208 is not executed. In this configuration, the "determination to be the second seat occupancy state" is maintained in the cases described above.

As illustrated in Fig. 2, the seat ECU 71 of the present embodiment outputs a result of the seat-occupancy state determination executed as described above as an external output signal Ex to an airbag ECU 72 and another external device. In this configuration, in the vehicle of the present embodiment, inflation control of an airbag (not illustrated) is executed, based on the result of the seat-occupancy state determination by the seat ECU 71.

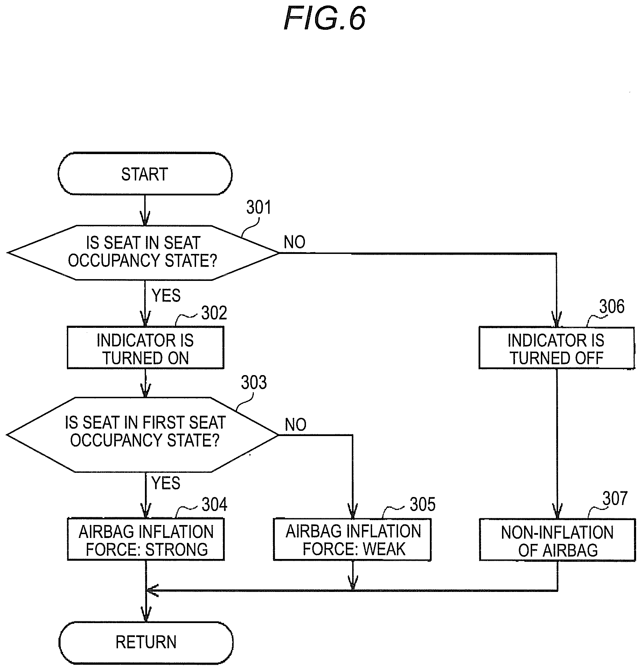

Specifically, as illustrated in a flowchart in Fig. 6, in the vehicle of the present embodiment, in a case where the external output signal Ex of the seat ECU 71 indicates that the seat 1 is in the seat occupancy state (Step 301: YES), the airbag ECU 72 first causes an indicator (not illustrated), which indicates that the airbag can be inflated, to be turned ON (Step 302). Next, the airbag ECU 72 determines whether or not the seat occupancy state of the seat 1 is the first seat occupancy state (Step 303). Then, in this configuration, in the case where the seat occupancy state of the seat 1 is the first seat occupancy state (Step 303: YES), a control mode of the airbag is set to a first inflation mode having a predetermined inflation force (inflation force: strong, in Step 304).

Meanwhile, in a case where, in Step 303 described above, the seat occupancy state of the seat 1 is the second seat occupancy state (Step 303: NO), the airbag ECU 72 sets the control mode of the airbag to a second inflation mode having a weaker force than in the first inflation mode described above (Step 305). In addition, in a case where, in Step 301 described above, the external output signal indicates that the seat 1 is in the seat non-occupancy state (Step 301: NO), the airbag ECU 72 causes the indicator of the airbag to be turned OFF (Step 306). In this configuration, the control mode of the airbag is set to a non-inflation mode in which inflation of the airbag is not performed (Step 307).

### Setting of Threshold Value of Load, Based on Duration After Seat Occupancy Sensor Is Turned off

Next, setting of the threshold value of the load by the seat ECU 71 of the present embodiment, based on the duration after the seat occupancy sensor is turned off, will be described.

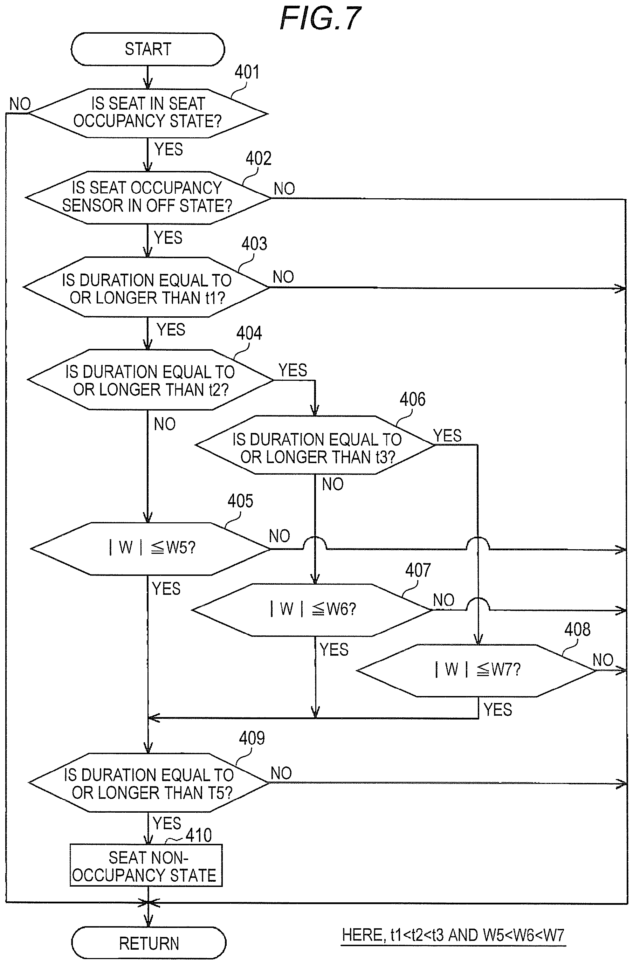

As illustrated in a flowchart in Fig. 7, in a case where the seat occupancy sensor 21 is in the OFF state (Step 402: Yes) in a state in which it is determined that the seat 1 is in the first seat occupancy state or the second seat occupancy state (Step 401: YES), the seat ECU 71 of the present embodiment executes transition determination to the seat non-occupancy state, based on a comparison between the detected value W and the threshold value of the load.

Specifically, the seat ECU 71 of the present embodiment executes the transition determination from the seat occupancy state to the seat non-occupancy state (seat non-occupancy determination), based on whether or not the detected value W of the load detected by the load sensor 11, to be exact, an absolute value, is equal to or lower than the threshold value. Further, in the seat-occupancy state detection device 30 of the present embodiment, it is determined in Step 402 that the seat occupancy sensor 21 is turned OFF, on a condition that all of the three groups of seat occupancy sensors 21a to 21c, which form the pressure sensitive portions 60 at different positions on the seat occupancy surface 10, enter the OFF state. In addition, the seat ECU 71 of the present embodiment monitors the duration after the seat occupancy sensors 21 enter the OFF state (Steps 403, 404, and 406). In this configuration, a threshold value (third threshold value) of the load used in the seat non-occupancy determination is set to a higher value (W5<W6<W7), as the duration increases (t1<t2<t3) after the seat occupancy sensors 21 enter the OFF state (Steps 405, 407, and 408).

To be exact, the seat ECU 71 determines whether or not the duration after the seat occupancy sensors 21 enter the OFF state (Step 402: YES) is equal to or longer than the predetermined period of time t1 (Step 403). Then, in the case where the duration is equal to or longer than the predetermined period of time t1 (t≥t1 and then, Step 403: YES), the seat ECU further determines whether or not the duration is equal to or longer than the predetermined period of time t2 (Step 404). Then, in a case where the duration does not reach the predetermined period of time t2 (t<t2 and then, Step 404: NO) after the seat occupancy sensors 21 enter the OFF state, a threshold value of the load used in the seat non-occupancy determination is set to "W5", and it is determined whether or not the detected value W of the load detected by the load sensor 11 is equal to or lower than the threshold value W5 (Step 405).

In addition, in the case where, in Step 404, the duration is equal to or longer than the predetermined period of time t2 (t≥t2 and then, Step 404: YES) after the seat occupancy sensors 21 enter the OFF state, the seat ECU 71 determines whether or not the duration is equal to or longer than the predetermined period of time t3 (Step 406). Then, in a case where the duration after the seat occupancy sensors 21 enter the OFF state does not reach the predetermined period of time t3 (t<t3 and then, Step 406: NO), a threshold value of the load used in the seat non-occupancy determination is set to "W6", and it is determined whether or not the detected value W of the load detected by the load sensor 11 is equal to or lower than the threshold value W6 (Step 407).

Further, in the case where, in Step 406, the duration is equal to or longer than the predetermined period of time t3 (t≥t3 and then, Step 406: YES) after the seat occupancy sensors 21 enter the OFF state, the seat ECU 71 of the present embodiment sets the threshold value of the load used in the seat non-occupancy determination to "W7". Then, it is determined that the detected value W of the load detected by the load sensor 11 is equal to or lower than the threshold value W7 (Step 408).

To be more exact, in a case where it is determined in Step 405 described above that the detected value W of the load is equal to or lower than the threshold value W5 (|W|≤W5 and then, Step 405: YES), the seat ECU 71 of the present embodiment determines whether or not the detected value W of the load, which is equal to or lower than the threshold value W5, is maintained to be equal to or longer than a predetermined period of time T5 (Step 409). Similarly, in a case where it is determined in Step 407 described above that the detected value W of the load is equal to or lower than the threshold value W6 (|W|≤W6 and then, Step 407: YES), the seat ECU also determines, in Step 409, whether or not the detected value W of the load, which is equal to or lower than the threshold value W6, is maintained to be equal to or longer than the predetermined period of time T5. In addition, in a case where it is determined in Step 408 described above that the detected value W of the load is equal to or lower than the threshold value W7 (|W|≤W7 and then, Step 408: YES), the seat ECU also determines, in Step 409, whether or not the detected value W of the load, which is equal to or lower than the threshold value W7, is maintained to be equal to or longer than the predetermined period of time T5. In this configuration, in a case where it is determined in Step 409 that the duration is equal to or longer than the predetermined period of time T5 (T≥T5 and then, Step 409: YES), the seat ECU 71 of the present embodiment determines that the seat 1 is in the seat non-occupancy state in which no occupant sits on the seat 1 (Step 410).

Further, in a case where, in Step 402 described above, the seat occupancy sensors 21 are in the ON state (Step 402: NO) and in a case where, in Step 403, the duration does not reach the predetermined period of time t1 (t<t1 and then, Step 403: NO) after the seat occupancy sensors 21 enter the OFF state, the seat ECU 71 of the present embodiment does not execute the processes after Step 403. In addition, in Step 405, in a case where the detected value W of the load is higher than the predetermined threshold value W5 (W>W5 and then, Step 405: NO) and, in Step 407, the detected value W of the load is higher than the predetermined threshold value W6 (W>W6 and then, Step 407: NO), the processes after Step 405 and Step 407 are not executed. Further, in Step 408, also in a case where the detected value W of the load is higher than the threshold value W7 (W>W7 and then, NO in Step 408) and in a case where, in Step 409 described above, a period of time, during which the detected value W of the load, which is equal to or lower than the threshold value, is detected to be maintained, does not reach the predetermined period of time T5 (T<T5 and then, Step 409: NO), the process after Step 409 is not executed. Then, the seat ECU 71 of the present embodiment is configured to maintain the "previously performed determination of the seat occupancy state" in the states described above.

In addition, in Step 401 described above, in a case where it is determined that the seat 1 is in the seat non-occupancy state (Step 401: NO), the seat ECU 71 of the present embodiment does not execute the processes of the steps after Step 401. Then, in this configuration, the "previously performed determination of the seat non-occupancy state" is maintained.

In other words, in a case where the seat occupancy sensors 21 having the pressure sensitive portions 60 on the seat occupancy surface 10 of the seat 1 enter the OFF state, and the detected value W (absolute value) of the load detected by the load sensor 11 becomes a value indicating an unloaded state, it is possible to assume that the occupant on the seat 1 takes a seat-non-occupancy behavioral posture. However, the detected value W of the load tends to significantly change by rocking of the seat cushion 2 based on the occupant's behavioral posture, and the seat occupancy sensors 21 also temporarily enter the OFF state due to the change in the occupant's behavioral posture, in some cases. Therefore, immediately after the seat occupancy sensors 21 enter the OFF state, it is difficult to distinguish the occupant's behavioral posture from the seat non-occupancy behavior to a temporary change in posture and, thereby, confirmation of the seat non-occupancy determination can be delayed.

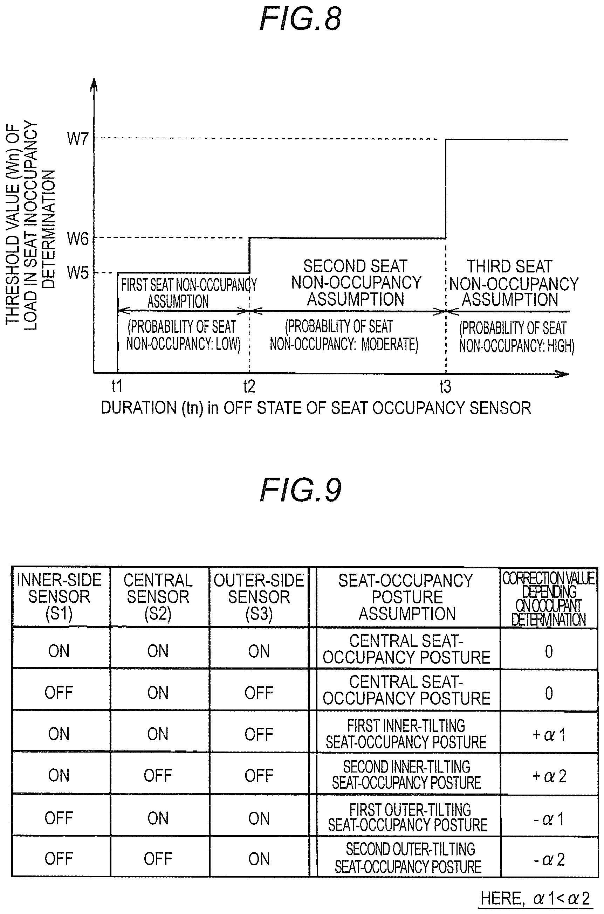

In this respect, as shown in Fig. 8, the seat ECU 71 of the present embodiment monitors the duration (t) after the seat occupancy sensors 21 enter the OFF state and, thereby, the seat non-occupancy behavioral posture of the occupant who sits on the seat 1 and reliability of the seat non-occupancy behavioral posture are assumed. In other words, there is a higher possibility that the occupant's behavioral posture, from which transition to the OFF state of the seat occupancy sensors 21 ensues, actually means leaving the seat 1 as the duration increases after the seat occupancy sensors 21 enter the OFF state. Thus, the seat ECU 71 of the present embodiment is configured to set the threshold value of the load used in the seat non-occupancy determination to a higher value, as the reliability of the seat non-occupancy behavior assumed by the duration increases after the seat occupancy sensors 21 enter the OFF state.

Specifically, the seat ECU 71 of the present embodiment sets the threshold value of the load used in the seat non-occupancy determination to the lowest "W5" in first seat non-occupancy assumption discrimination in which the duration is maintained for the predetermined period of time t1 to the predetermined period of time t2 after the seat occupancy sensors 21 enter the OFF state. In addition, in second seat non-occupancy assumption discrimination in which the duration is maintained to be longer as for the predetermined period of time t2 to the predetermined period of time t3, the threshold value of the load used in the seat non-occupancy determination is set to "W6" higher than the threshold value W5 in the first seat non-occupancy assumption discrimination. Further, in third seat non-occupancy assumption discrimination in which the duration is equal to or longer than the predetermined period of time t3, the threshold value of the load used in the seat non-occupancy determination is set to the highest "W7". Accordingly, determination conditions according to the load Ws (W) are relaxed in a stepwise manner, based on the duration after the seat occupancy sensors 21 enter the OFF state and, thereby, the seat ECU 71 of the present embodiment can more rapidly perform the seat non-occupancy determination without lowering the determination accuracy.

### Setting of Threshold Value of Load Based on Combination of ON/OFF of Seat Occupancy Sensors

Next, there will be provided description on the threshold value of the load by the seat ECU 71 of the present embodiment, based on a combination of the ON/OFF states of the seat occupancy sensors 21a to 21c.

As illustrated in Figs. 2 and 9, the seat ECU 71 of the present embodiment assumes the seat occupancy posture and tilting discrimination of the seat occupancy posture of the occupant on the seat 1, based on the combination of the ON/OFF states, that is, the ON/OFF combination in the three groups of seat occupancy sensors 21a to 21c. The threshold values W1 to W4 (fourth threshold value) of the load used in occupant detection determination (refer to Figs. 4 and 5) in which the physique of the occupant sitting on the seat is determined are corrected for each tilting discrimination of the assumed seat occupancy postures.

In other words, an applied position of the load Ws by the occupant sitting on the seat 1 is changed depending on the occupant's seat occupancy posture. For example, in a case where the occupant's seat occupancy posture tilts in a width direction of the seat, such as in a state in which the occupant sits at a position shifted in the width direction of the seat, or in the state in which the occupant leans over in the width direction of the seat, the applied position of the load Ws is shifted in a tilting direction of the seat occupancy posture. In this manner, an error in the detected value W of the load detected by the load sensor 11 can be made.

Specifically, the applied position of the load Ws by the occupant sitting on the seat 1 is closer to the end portion on the inner side in the width direction of the seat, on which the load sensor 11 is disposed, as the occupant's seat occupancy posture tilts more to the inner side in the width direction of the seat, and the applied position of the load is farther from the end portion on the inner side in the width direction of the seat as the seat occupancy posture has a greater tilt to the outer side in the width direction of the seat. Therefore, in the seat-occupancy state detection device 30 of the present embodiment, the load Ws (W) is detected to be a higher value, as the applied position of the load Ws is closer to the end portion on the inner side in the width direction of the seat on which the load sensor 11 is disposed.

In this respect, as described above, the seat ECU 71 of the present embodiment corrects the threshold values W1 to W4 of the load used in the occupant detection determination such that threshold values W1' to W4' obtained after the correction are higher values, as the applied position of the load Ws, which is specified from the tilting discrimination of the seat occupancy posture, is closer to the position at which the load sensor 11 is disposed. In this manner, the seat ECU 71 of the present embodiment can perform the occupant detection determination with high accuracy.

To be exact, in the case where all of the seat occupancy sensors 21a to 21c, which are arranged side by side in the width direction of the seat as described above and have the pressure sensitive portions 60 at positions different from each other, enter the ON state, the seat ECU 71 of the present embodiment assumes a "central seat-occupancy posture" in which the occupant's seat occupancy posture does not tilt on the seat 1. Then, even in a case where only the seat occupancy sensor 21b having the pressure sensitive portion 60 at the central position in the width direction of the seat enters the ON state, it is assumed that the occupant's seat occupancy posture is the "central seat-occupancy posture".

In addition, in a case where the seat occupancy sensor 21a having the pressure sensitive portion 60 at a position on the inner side in the width direction of the seat and the seat occupancy sensor 21b at the center in the width direction of the seat enter the ON state, but the seat occupancy sensor 21c having the pressure sensitive portion 60 at a position on the outer side in the width direction of the seat enters the OFF state, the seat ECU 71 assumes "first inner-tilting seat-occupancy posture" in which the occupant's seat occupancy posture tilts to the inner side. Further, in a case where the seat occupancy sensor 21c on the outer side in the width direction of the seat and the seat occupancy sensor 21b at the center in the width direction of the seat enter the ON state, but the seat occupancy sensor 21a on the inner side in the width direction of the seat enters the OFF state, the seat ECU 71 assumes "first outer-tilting seat-occupancy posture" in which the occupant's seat occupancy posture tilts to the outer side. Then, in a case where only the seat occupancy sensor 21a on the inner side in the width direction of the seat enters the ON state, it is assumed that the occupant's seat occupancy posture is "second inner-tilting seat occupancy posture" in which the occupant's seat occupancy posture further tilts to the inner side in the width direction of the seat. In a case where only the seat occupancy sensor 21c on the outer side in the width direction of the seat enters the ON state, it is assumed that the occupant's seat occupancy posture is "second outer-tilting seat occupancy posture" in which the occupant's seat occupancy posture further tilts to the outer side in the width direction of the seat.

Further, in a case where it is assumed that the seat occupancy posture is the "first inner-tilting seat-occupancy posture" in the tilting discrimination as the result of such seat-occupancy posture assumption, the seat ECU 71 of the present embodiment adds a correction value α1 to the threshold values W1 to W4 of the load used in the occupant detection determination (for example, W1'=W1+α1). In a case where it is assumed that the seat occupancy posture is the "second inner-tilting seat-occupancy posture" in the tilting discrimination, the seat ECU adds a correction value α2, which is a higher value (absolute value) than the correction value α1 described above, to the threshold values W1 to W4 of the load used in the occupant detection determination (for example, W1'=W1+α2, here, α1<α2).

Meanwhile, in a case where it is assumed that the seat occupancy posture is the "first outer-tilting seat-occupancy posture" in the tilting discrimination as the result of the seat-occupancy posture assumption described above, the seat ECU 71 subtracts the correction value α1 from the threshold values W1 to W4 of the load used in the occupant detection determination (for example, W1'=W1-α1). In addition, in a case where it is assumed that the seat occupancy posture is the "second outer-tilting seat-occupancy posture" in the tilting discrimination, the seat ECU subtracts the correction value α2 from the threshold values W1 to W4 of the load used in the occupant detection determination (for example, W1'=W1-α2). In a case where it is assumed that the seat occupancy posture is the "central seat-occupancy posture" as the result of the seat-occupancy posture assumption described above, the seat ECU 71 of the present embodiment is configured not to perform correction of the threshold values W1 to W4 of the load used in the occupant detection determination.

In other words, the seat ECU 71 of the present embodiment performs adding correction to the threshold values W1 to W4 of the load used in the occupant detection determination such that the corrected threshold values W1' to W4' are increased to be higher values, as the assumed seat occupancy posture has a greater tilt to the inner side in the width direction of the seat, in the tilting discrimination, on the basis of the case where the occupant's seat occupancy posture does not tilt. In addition, the seat ECU performs subtracting correction to the threshold values W1 to W4 of the load used in the occupant detection determination such that the corrected threshold values W1' to W4' are decreased to be lower values, as the assumed seat occupancy posture has a greater tilt to the outer side in the width direction of the seat, in the tilting discrimination. Then, the seat ECU 71 of the present embodiment determines the physique of the occupant using the corrected threshold values W1' to W4', thereby making it possible to perform the occupant detection determination with high accuracy.

### Detection of Abnormality in Seat Occupancy Sensor

Next, detection of abnormality in the seat occupancy sensor, which is performed by the seat ECU 71 of the present embodiment, will be described.

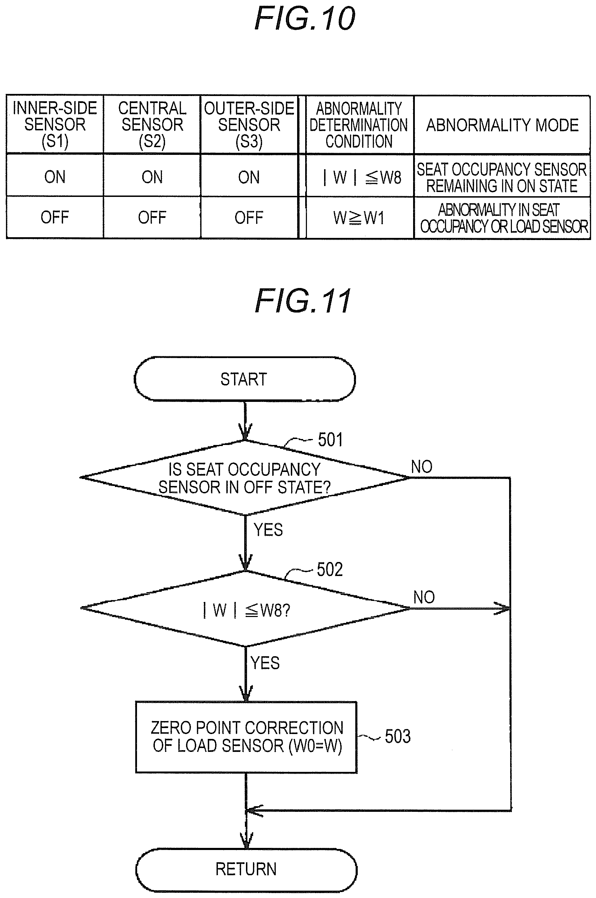

As shown in Fig. 10, the seat ECU 71 of the present embodiment monitors the detected value W of the load detected by the load sensor 11 in a case where all of the three groups of seat occupancy sensors 21a to 21c, which form the pressure sensitive portions 60 at different positions on the seat occupancy surface 10, enter the ON state (refer to Fig. 9, the central seat-occupancy posture). In this state, in a case where the detected value W (absolute value) of the load is equal to or lower than a predetermined threshold value W8 (first threshold value) that indicates the unloaded state, it is determined that an "abnormality" (first abnormality), in which the ON state of the seat occupancy sensors 21a to 21c is maintained without switching between the ON/OFF states, occurs.

In other words, in the seat-occupancy state detection device 30 of the present embodiment, the cushion pad is disposed on the inner side of the seat cushion 2, on which the membrane switches 20 constituting the seat occupancy sensors 21a to 21c are arranged. Also, the cushion material (for example, a forming resin material) forming the cushion pad often tends to be subjected to thermal expansion. Therefore, in a high-temperature environment, the seat occupancy sensor is pressed by the expanded cushion pad, and thereby there is a possibility that the seat occupancy sensors 21a to 21c remain in the ON state.

In this respect, the seat ECU 71 of the present embodiment performs abnormality determination based on a comparison between the threshold value and the detected value W of the load sensor 11 and the ON/OFF combination of the seat occupancy sensors 21a to 21c as described above. In this manner, it is possible to rapidly detect the abnormality in which the ON state of the seat occupancy sensors 21a to 21c is maintained without switching between the ON/OFF states.

In addition, the seat ECU 71 of the present embodiment monitors the detected value W of the load detected by the load sensor 11 even in a case where all of the seat occupancy sensors 21a to 21c enter the OFF state. In this configuration, in a case where the detected value W of the load is equal to or higher than the threshold value W1 used in the determination of the first seat occupancy state, that is, a value corresponding to the case where an "adult" sits on the seat 1, it is determined that an abnormality occurs in any one of the seat occupancy sensors 21a to 21c or the load sensor 11.

### Zero-Point Correction of Load

Next, a method of a zero-point correction of the load Ws, which is performed by the seat ECU 71 of the present embodiment, will be described.

As illustrated in a flowchart in Fig. 11, in the seat-occupancy state detection device 30 of the present embodiment, the seat ECU 71 determines whether or not all of the three groups of seat occupancy sensors 21a to 21c, which form the pressure sensitive portions 60 at different positions on the seat occupancy surface 10, enter the OFF state (Step 501). Further, the seat ECU 71 determines, in the case where all of the three groups of seat occupancy sensors 21 enter the OFF state (Step 501: YES), whether or not the detected value W (absolute value) of the load detected by the load sensor 11 is equal to or lower than the predetermined threshold value W8 indicating the unloaded state (Step 502). In this configuration, in the case where the detected value W of the load is equal to or lower than the predetermined threshold value W8 (Step 502: YES), the seat-occupancy state detection device 30 of the present embodiment sets the detected value W of the load to a zero point W0 of the load (W0=W, Step 503, and zero-point correction).

Specifically, the seat ECU 71 of the present embodiment stores the zero point W0 of the load, together with the threshold values (W1 to W8, t0 to t3, and T1 to T5) of the load used in the seat-occupancy state determination described above, and the correction values (α1 and α2), in a storage area 71a (refer to Fig. 1). In other words, the detected value W of the load detected by the load sensor 11 becomes a value with the zero point W0 as a reference (±0). In this configuration, the seat ECU 71 of the present embodiment performs the zero-point correction by updating a value of the zero point W0 stored in the storage area 71a to the detected value W of the load at the time of correction.

Hereinafter, according to the present embodiment, it is possible to achieve the following effects.
(1) The seat ECU 71 as an abnormality determination unit monitors the detected value W of the load detected by the load sensor 11 in the case where all of the three groups of seat occupancy sensors 21a to 21c, which form the pressure sensitive portions 60 at different positions on the seat occupancy surface 10, enter the ON state. In this state, regardless of whether all of the seat occupancy sensors 21a to 21c enter the ON state, in a case where the detected value W (absolute value) of the load detected by the load sensor 11 is equal to or lower than the predetermined threshold value W8 that indicates the unloaded state, it is determined that the "abnormality", in which the ON state of the seat occupancy sensors 21a to 21c is maintained without switching between the ON/OFF states, occurs.
   In other words, in a high-temperature environment, the cushion pad disposed on the inner side of the seat cushion 2 is subjected to thermal expansion, together with the membrane switches 20 that configure the seat occupancy sensors 21a to 21c. Then, the seat occupancy sensor is pressed by the expanded cushion pad, and thereby there is a possibility that the seat occupancy sensors 21a to 21c remain in the ON state. However, in this configuration, it is possible to rapidly detect the occurrence of the abnormality in which the ON state of the seat occupancy sensors is maintained without switching between the ON/OFF states, with a simple configuration. In this manner, it is possible to perform the seat-occupancy state determination with higher accuracy.
(2) The seat ECU 71 monitors the detected value W of the load detected by the load sensor 11 even in a case where all of the seat occupancy sensors 21a to 21c enter the OFF state. In a case where all of the seat occupancy sensors 21a to 21c enter the OFF state, and the detected value W of the load is equal to or higher than the threshold value W1 as the second threshold value, that is, a value corresponding to a case where an "adult" sits on the seat 1, it is determined that an abnormality (second abnormality) occurs in any one of the seat occupancy sensors 21a to 21c or the load sensor 11.
   In this configuration, it is possible to rapidly detect the abnormality in the seat occupancy sensors 21 or the load sensor 11, with a simple configuration.
(3) The seat ECU 71 as a zero-point correction unit sets the detected value W of the load to the zero point W0 of the load, in the case where the seat occupancy sensors 21 enter the OFF state and the detected value W (absolute value) of the load, which is detected by the load sensor 11, is equal to or lower than the predetermined threshold value W8 indicating the unloaded state.
   In other words, in the detection of the load Ws applied to the seat occupancy surface 10 of the seat 1, the preset zero point W0 of the load can be shifted due to rocking of the seat cushion 2 that forms the seat occupancy surface 10. However, in this configuration, the zero point W0 of the load is updated to an appropriate value, as needed. In this manner, it is possible to perform the seat-occupancy state determination with higher accuracy.
(4) The seat ECU 71 as the seat-occupancy state determination unit determines the seat non-occupancy state in which no occupant sits on the seat 1 in the case where the seat occupancy sensors 21 enter the OFF state and the detected value W of the load detected by the load sensor 11 is equal to or lower than the threshold value. Then, the seat ECU 71 as the threshold-value setting unit sets the threshold value of the load, which is used in the determination of the seat non-occupancy state, to the higher value (W5<W6<W7), as the duration increases after the seat occupancy sensors 21 enter the OFF state (t1<t2<t3).
   In other words, there is a higher possibility that the occupant's behavioral posture, from which transition to the OFF state of the seat occupancy sensors 21 ensues, actually means leaving the seat, as the duration increases after the seat occupancy sensors 21 enter the OFF state. Hence, in this configuration, it is possible to rapidly perform the seat non-occupancy determination without lowering determination accuracy.
(5) The seat-occupancy state detection device 30 includes plural groups (three groups) of seat occupancy sensors 21a to 21c arranged side by side in the width direction of the seat. In addition, the load sensor 11 is provided on the lower side of the seat 1 at the end portion on the inner side in the width direction of the seat. Further, the seat ECU 71 as the occupant-detection determination section determines the physique of the occupant who sits on the seat 1, based on a comparison between the detected value W of the load detected by the load sensor 11 and the threshold values W1 to W4. Also, the seat ECU 71 as the second threshold-value setting section sets (corrects) the threshold values W1 to W4 (W1' to W4') of the load, which are used in the occupant detection determination, to higher values, as the applied position of the load Ws, which is assumed by the ON/OFF combination of the seat occupancy sensors 21a to 21c, is closer to an end portion on the inner side in the width direction of the seat, on which the load sensor 11 is disposed.

In other words, it is possible to assume the applied position of the load Ws with the occupant sitting on the seat 1 by the ON/OFF combination of the seat occupancy sensors 21a to 21c arranged side by side in the width direction of the seat. Also, the value (W) of the load Ws detected by the load sensor 11 is increased, as the applied position of the load Ws is closer to the end portion on the inner side in the width direction of the seat, on which the load sensor 11 is disposed. Hence, in this configuration, it is possible to more rapidly perform the occupant detection determination without lowering the determination accuracy.

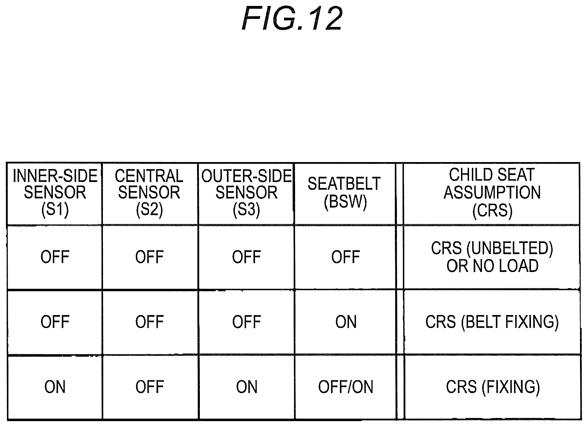

Further, the embodiment described above may be modified as follows.
- In the embodiment described above, the three groups of seat occupancy sensors 21a to 21c arranged side by side in the width direction of the seat are provided on the inner side of the seat cushion 2. The seat occupancy sensors 21a to 21c form the pressure sensitive portions 60 formed at different positions on the seat occupancy surface 10, respectively. However, the configuration is not limited thereto, and a configuration of including two, or four or more groups of seat occupancy sensors 21 may be employed. For example, in a case where the combination of the ON/OFF states in the plurality of seat occupancy sensors 21, that is, the ON/OFF combination, is not used in the seat-occupancy state determination, or the like, a single group of seat occupancy sensor 21 may be employed. In this case, the detection of the abnormality or the zero-point correction of the seat occupancy sensors 21 may be performed, based on the ON/OFF state of the single-system seat occupancy sensor 21.
- In the embodiment described above, the load sensor 11 is provided on the lower side of the seat 1, at the rear end portion on the inner side in the width direction of the seat. However, the configuration is not limited thereto, and the load sensor may be provided on the outer side in the width direction of the seat. Further, a configuration, in which a plurality of the load sensors 11 are arranged at different positions from each other, may be employed. In this manner, there is a possibility that the threshold values W1 to W4 of the load do not need to be corrected, based on the ON/OFF combination of the seat occupancy sensors 21a to 21c.
- In the embodiment described above, the occupant's seat occupancy posture on the seat 1 is assumed on the basis of the ON/OFF combination of the seat occupancy sensors 21a to 21c; however, the assumption may be performed, based on an additional wearing state of a seat belt (not illustrated). For example, as illustrated in Fig. 12, in a configuration in which it is possible to detect ON/OFF states of a buckle of the seat belt (BSW), it is possible to assume a fixing state of a child seat mounted on the seat 1. Further, a signal indicating the wearing state of the seat belt can be also used in the occupant's seat-occupancy state determination as described above (refer to Fig. 4), airbag control (refer to Fig. 6), the seat non-occupancy determination (refer to Fig. 7), the abnormality determination of the seat occupancy sensor 21 (refer to Fig. 10), the zero-point correction of the load Ws (refer to Fig. 11), or the like. In addition, conditions for the duration may be combined. In this manner, it is possible to enhance the determination accuracy.
- In the embodiment described above and other examples, the seat ECU 71 functions as the seat-occupancy state determination unit, the seat non-occupancy state determination section, the threshold-value setting section, the occupant-detection determination section, the second threshold-value setting section, the abnormality determination unit, and the zero-point correction unit. However, the configuration is not limited thereto, and a configuration, in which the respective function control units are distributed to a plurality of information processors, may be employed.

Next, effects of the technical ideas which can be understood in the embodiments described above are described.
(a) The seat-occupancy state detection device includes the seat non-occupancy state determination section that determines a seat non-occupancy state in which no occupant sits on the seat in a case where the seat occupancy sensor enters the OFF state and the load is equal to or lower than the threshold value, and the threshold-value setting section that sets the threshold value of the load used in determination of the seat non-occupancy state to a higher value, as a duration increases after the seat occupancy sensor enters the OFF state.

In other words, there is a higher possibility that the occupant's behavioral posture, from which transition to the OFF state of the seat occupancy sensors ensues, actually means leaving the seat, as the duration increases after the seat occupancy sensors enter the OFF state. Hence, in this configuration, it is possible to rapidly perform the seat non-occupancy determination without lowering determination accuracy.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention as defined in the claims. Accordingly, it is expressly intended that all such variations, changes and equivalents which fall within the scope of the present invention as defined in the claims, be embraced thereby.

## Claims

1. A seat-occupancy state detection device (30) comprising:
a seat occupancy sensor (21) that forms a pressure sensitive portion (60) on a seat occupancy surface (10) of a seat (1);
a load sensor (11) that detects a load (Ws) applied to the seat occupancy surface;
a seat-occupancy state determination unit (71) that determines a seat occupancy state of an occupant on the seat, based on an ON/OFF state of the seat occupancy sensor (21) and the load which is detected by the load sensor (11); and
an abnormality determination unit that is configured to determine an occurrence of a first abnormality in which the ON state of the seat occupancy sensor (21) is maintained, in a case where the seat occupancy sensor (21) is in the ON state, and the load, which is detected by the load sensor (11), is equal to or lower than a first threshold value indicating an unloaded state.

2. The seat-occupancy state detection device (30) according to claim 1, further comprising:
a plurality of the seat occupancy sensors (21) that form the pressure sensitive portions at different positions from each other on the seat occupancy surface (10),
wherein the abnormality determination unit is configured to determine the occurrence of the first abnormality in the respective seat occupancy sensors (21), in a case where all of the seat occupancy sensors are in the ON state, and the load, which is detected by the load sensor (11), is equal to or lower than the first threshold value.

3. The seat-occupancy state detection device (30) according to claim 1 or 2,
wherein the abnormality determination unit is configured to determine an occurrence of a second abnormality in the seat occupancy sensor (21) or in the load sensor (11), in a case where the seat occupancy sensor is in the OFF state, and the load, which is detected by the load sensor (11), is equal to or higher than a second threshold value.

4. The seat-occupancy state detection device (30) according to any one of claims 1 to 3, further comprising:
a zero-point correction unit that is configured to set the load to a zero point of the load, in a case where the seat occupancy sensor (21) is in the OFF state and the load, which is detected by the load sensor (11), is equal to or lower than the first threshold value.

5. The seat-occupancy state detection device (30) according to any one of claims 1 to 4,
wherein the seat-occupancy state determination unit (71) includes
a seat non-occupancy state determination section that is configured to determine a seat non-occupancy state in which no occupant sits on the seat (1) in a case where the seat occupancy sensor (21) enters the OFF state and the load is equal to or lower than a third threshold value, and
a first threshold-value setting section that is configured to set the third threshold value used in determination of the seat non-occupancy state to a higher value, as a duration increases after the seat occupancy sensor (21) enters the OFF state.

6. The seat-occupancy state detection device (30) according to any one of claims 1 to 5, further comprising:
the load sensor (11) provided on a lower side of the seat (1) at an end portion on one side in a width direction of the seat (1); and
a plurality of the seat occupancy sensors (21) arranged side by side in the width direction of the seat (1),
wherein the seat-occupancy state determination unit includes
an occupant-detection determination section that is configured to determine a physique of the occupant who sits on the seat (1), based on a comparison between the load, which is detected by the load sensor (11), and a fourth threshold value, and
a second threshold-value setting section that is configured to set the fourth threshold value to a higher value, as a load-applied position, which is assumed by a combination of the ON/OFF states of the plurality of seat occupancy sensors (21), is closer to a position at which the load sensor (11) is disposed.

## Patentansprüche

1. Sitzbelegungsstatusdetektionsvorrichtung (30), umfassend:
einen Sitzbelegungssensor (21), der einen druckempfindlichen Abschnitt (60) auf einer Sitzbelegungsoberfläche (10) eines Sitzes (1) bildet,
einen Lastsensor (11), der eine Last (Ws) detektiert, die auf die Sitzbelegungsoberfläche aufgebracht wird,
eine Sitzbelegungsstatusbestimmungseinheit (71), die basierend auf einem EIN/AUS-Zustand des Sitzbelegungssensors (21) und der Last, die durch den Lastsensor (11) detektiert wird, einen Sitzbelegungsstatus eines Insassen auf dem Sitz bestimmt, und
eine Abnormitätsbestimmungseinheit, die dazu ausgebildet ist, das Auftreten einer ersten Abnormität zu bestimmen, bei welcher der EIN-Zustand des Sitzbelegungssensors (21) in einem Fall beibehalten wird, in dem der Sitzbelegungssensor (21) in dem EIN-Zustand ist und die Last, die durch den Lastsensor (11) detektiert wird, kleiner oder gleich einem ersten Schwellenwert ist, der einen nicht beladenen Zustand angibt.

2. Sitzbelegungsstatusdetektionsvorrichtung (30) nach Anspruch 1, ferner umfassend:
mehrere Sitzbelegungssensoren (21), welche die druckempfindlichen Abschnitte an voneinander verschiedenen Positionen auf der Sitzbelegungsoberfläche (10) bilden,
wobei die Abnormitätsbestimmungseinheit dazu ausgebildet ist, das Auftreten der ersten Abnormität in den jeweiligen Sitzbelegungssensoren (21) in einem Fall zu bestimmen, in dem alle Sitzbelegungssensoren in dem EIN-Zustand sind und die Last, die durch den Lastsensor (11) detektiert wird, kleiner oder gleich dem ersten Schwellenwert ist.

3. Sitzbelegungsstatusdetektionsvorrichtung (30) nach Anspruch 1 oder 2,
wobei die Abnormitätsbestimmungseinheit dazu ausgebildet ist, ein Auftreten einer zweiten Abnormität in dem Sitzbelegungssensor (21) oder in dem Lastsensor (11) in einem Fall zu bestimmen, in dem der Sitzbelegungssensor in dem AUS-Zustand ist und die Last, die durch den Lastsensor (11) detektiert wird, größer oder gleich einem zweiten Schwellenwert ist.

4. Sitzbelegungsstatusdetektionsvorrichtung (30) nach einem beliebigen der Ansprüche 1 bis 3, ferner umfassend:
eine Nullpunktkorrektureinheit, die dazu ausgebildet ist, die Last in einem Fall auf einen Nullpunkt der Last zu stellen, in dem der Sitzbelegungssensor (21) in dem AUS-Zustand ist und die Last, die durch den Lastsensor (11) detektiert wird, kleiner oder gleich dem ersten Schwellenwert ist.

5. Sitzbelegungsstatusdetektionsvorrichtung (30) nach einem beliebigen der Ansprüche 1 bis 4,
wobei die Sitzbelegungsstatusbestimmungseinheit (71) umfasst:
einen Sitznichtbelegungsstatusbestimmungsabschnitt, der dazu ausgebildet ist, einen Sitznichtbelegungszustand zu bestimmen, in dem kein Insasse auf dem Sitz (1) sitzt, in einem Fall, in dem der Sitzbelegungssensor (21) in den AUS-Zustand übergeht und die Last kleiner oder gleich einem dritten Schwellenwert ist, und
einen ersten Schwellenwerteinstellabschnitt, der dazu ausgebildet ist, den dritten Schwellenwert, der bei der Bestimmung des Sitznichtbelegungszustands verwendet wird, auf einen höheren Wert einzustellen, wenn eine Zeitdauer, nachdem der Sitzbelegungssensor (21) in den AUS-Zustand übergeht, zunimmt.

6. Sitzbelegungsstatusdetektionsvorrichtung (30) nach einem beliebigen der Ansprüche 1 bis 5, ferner umfassend:
den Lastsensor (11), der auf einer unteren Seite des Sitzes (1) an einem Endabschnitt auf einer Seite in einer Breitenrichtung des Sitzes (1) vorgesehen ist, und
mehrere der Sitzbelegungssensoren (21), die Seite an Seite in der Breitenrichtung des Sitzes (1) angeordnet sind,
wobei die Sitzbelegungsstatusbestimmungseinheit umfasst:
einen Insassendetektionsbestimmungsabschnitt, der dazu ausgebildet ist, einen Körperbau des Insassen, der auf dem Sitz (1) sitzt, basierend auf einem Vergleich zwischen der Last, die durch den Lastsensor (11) detektiert wird, und einem vierten Schwellenwert zu bestimmen, und
einen zweiten Schwellenwerteinstellabschnitt, der dazu ausgebildet ist, den vierten Schwellenwert auf einen höheren Wert einzustellen, wenn eine Lastaufbringungsposition, die durch eine Kombination aus den EIN/AUS-Zuständen der mehreren Sitzbelegungssensoren (21) angenommen wird, näher einer Position ist, an welcher der Lastsensor (11) angeordnet ist.

## Revendications

1. Dispositif de détection d'état d'occupation de siège (30) comprenant :
un capteur d'occupation de siège (21) qui forme une partie sensible à la pression (60) sur une surface d'occupation de siège (10) d'un siège (1) ;
un capteur de charge (11) qui détecte une charge (Ws) appliquée sur la surface d'occupation de siège ;
une unité de détermination d'état d'occupation de siège (71) qui détermine un état d'occupation de siège d'un occupant sur le siège, en fonction d'un état de marche/arrêt du capteur d'occupation de siège (21) et de la charge qui est détectée par le capteur de charge (11) ; et
une unité de détermination d'anomalie qui est configurée pour déterminer une occurrence d'une première anomalie dans laquelle l'état de marche du capteur d'occupation de siège (21) est maintenu, dans un cas dans lequel le capteur d'occupation de siège (21) est à l'état de marche, et la charge, qui est détectée par le capteur de charge (11), est égale ou inférieure à une première valeur de seuil indiquant un état non chargé.

2. Dispositif de détection d'état d'occupation de siège (30) selon la revendication 1, comprenant en outre :
une pluralité de capteurs d'occupation de siège (21) qui forment les parties sensibles à la pression dans différentes positions les uns par rapport aux autres sur la surface d'occupation de siège (10),
dans lequel l'unité de détermination d'anomalie est configurée pour déterminer l'occurrence de la première anomalie dans les capteurs d'occupation de siège (21) respectifs, dans un cas dans lequel tous les capteurs d'occupation de siège sont à l'état de marche, et la charge, qui est détectée par le capteur de charge (11), est égale ou inférieure à la première valeur de seuil.

3. Dispositif de détection d'état d'occupation de siège (30) selon la revendication 1 ou 2,
dans lequel l'unité de détermination d'anomalie est configurée pour déterminer une occurrence d'une seconde anomalie dans le capteur d'occupation de siège (21) ou dans le capteur de charge (11), dans un cas dans lequel le capteur d'occupation de siège est à l'état d'arrêt, et la charge, qui est détectée par le capteur de charge (11), est égale ou supérieure à une deuxième valeur de seuil.

4. Dispositif de détection d'état d'occupation de siège (30) selon l'une quelconque des revendications 1 à 3, comprenant en outre :
une unité de correction du point zéro qui est configurée pour régler la charge sur un point zéro de la charge, dans un cas dans lequel le capteur d'occupation de siège (21) est à l'état d'arrêt, et la charge qui est détectée par le capteur de charge (11), est égale ou inférieure à la première valeur de seuil.

5. Dispositif de détection d'état d'occupation de siège (30) selon l'une quelconque des revendications 1 à 4,
dans lequel l'unité de détermination d'état d'occupation de siège (71) comprend :
une section de détermination d'état de non occupation de siège qui est configurée pour déterminer un état de non occupation de siège dans lequel aucun occupant n'est assis sur le siège (1) dans le cas dans lequel le capteur d'occupation de siège (21) entre dans l'état d'arrêt et la charge est égale ou inférieure à une troisième valeur de seuil, et
une première section de réglage de valeur de seuil qui est configurée pour régler la troisième valeur de seuil utilisée pour déterminer l'état de non occupation de siège sur une valeur supérieure, lorsqu'une durée augmente après que le capteur d'occupation de siège (21) est entré à l'état d'arrêt.

6. Dispositif de détection d'état d'occupation de siège (30) selon l'une quelconque des revendications 1 à 5, comprenant en outre :
le capteur de charge (11) prévu sur un côté inférieur du siège (1) au niveau d'une partie d'extrémité d'un côté dans une direction de largeur du siège (1) ; et
une pluralité de capteurs d'occupation de siège (21) agencés côte à côte dans la direction de largeur du siège (1),
dans lequel l'unité de détermination d'état d'occupation de siège comprend :
une section de détermination de détection d'occupant qui est configurée pour déterminer un physique de l'occupant qui est assis sur le siège (1), en fonction d'une comparaison entre la charge, qui est détectée par le capteur de charge (11) et une quatrième valeur de seuil, et
une seconde section de réglage de valeur de seuil qui est configurée pour régler la quatrième valeur de seuil sur une valeur supérieure, lorsqu'une position de charge appliquée, qui est adoptée par une combinaison des états de marche/arrêt de la pluralité de capteurs d'occupation de siège (21), est plus proche d'une position dans laquelle le capteur de charge (11) est disposé.
